# EUROPEAN PATENT APPLICATION

(11) **EP 1 160 076 A2**
(43) Date of publication of application: **05.12.2001**
(21) Application number: 01109295.4
(22) Date of filing: 17.04.2001
(51) Int. Cl.: B32B 27/12, E04F 13/08, E04F 15/02

(54) **Modular coating element for coating floors, walls and the like**

(30) Priority: 31.05.2000 IT MI000336 U
(71) Applicant: Paola Lenti S.r.l., 20036 Meda (MI) (IT)
(72) Inventor: Lenti, Paola, 20036 Meda (MI) (IT)
(74) Representative: Cicogna, Franco

(57) **Abstract**

A modular element for coating floors, walls and the like, comprises a thermoformable central layer (1), on an exposed face of which a top layer (2) made either of a fabric or non fabric material is arranged, on the other face of the central layer being arranged a lower layer (3) made of a material which can be coupled with a male portion of a tearable strip (5).

## Description

### BACKGROUND OF THE INVENTION

The present invention relates to a modular element for coating floors, walls and the like.

As is known, prior modular coating element for coating floors and the like, generally comprise moquette square element or tiles which can be brought to a mutually adjoining relationship for providing the covering for the floor.

Such an approach has been found as unsatisfactory with respect to the assembled patterns which can be obtained, since it is not possible to modify the exposed surface of the covering, with the exception of the colors used for said covering.

Another drawback of prior covering arrangements is that it is necessary to provide these covering elements with coupling means for coupling the finished covering to the floor, said coupling means being of difficult application.

### SUMMARY OF THE INVENTION

Accordingly, the aim of the present invention is to overcome the above mentioned drawbacks, by providing a modular element for coating floors, walls and the like, allowing a user to properly arrange a plurality of modular elements of a single size or multiple size, with a possibility of choosing materials and colors, as well as embossed decorations, to fit the contingent operating requirements and size.

Within the scope of the above mentioned aim, a main object of the present invention is to provide such a modular coating element which can be installed without requiring skilled labour and specifically designed tools or glue formulations.

A further object of the present invention is to provide such a modular element which can be easily cleaned and washed, both in their installed condition, and individually by using conventional cleaning systems.

Yet another object of the present invention is to provide such a modular covering element which provides a user the possibility of making coverings within a broad range of different patterns and colors and which, moreover, is also designed for providing a comfortable massaging effect to the user foot bottom.

Yet another object of the present invention is to provide such a modular covering element which, owing to its specifically designed construction, is very reliable and safe in operation.

According to one aspect of the present invention, the above mentioned aim and objects, as well as yet other objects, which will become more apparent hereinafter, are achieved by a modular coating element for coating floors and walls, characterized in that said modular coating element comprises a thermoformable central layer having an exposed face on which a fabric or non fabric martial top layer is arranged, said central layer having another face thereof on which is provided a lower layer made of a material which can be coupled with a male portion of a tearable strip.

### BRIEF DESCRIPTION OF THE DRAWINGS

Further characteristics and advantages of the present invention will become more apparent hereinafter from the following detailed disclosure of a preferred, though not exclusive, embodiment of a modular element for coating floors, walls and the like, which is illustrated, by way of a merely indicative, but not limitative, example, in the accompanying drawings, where:

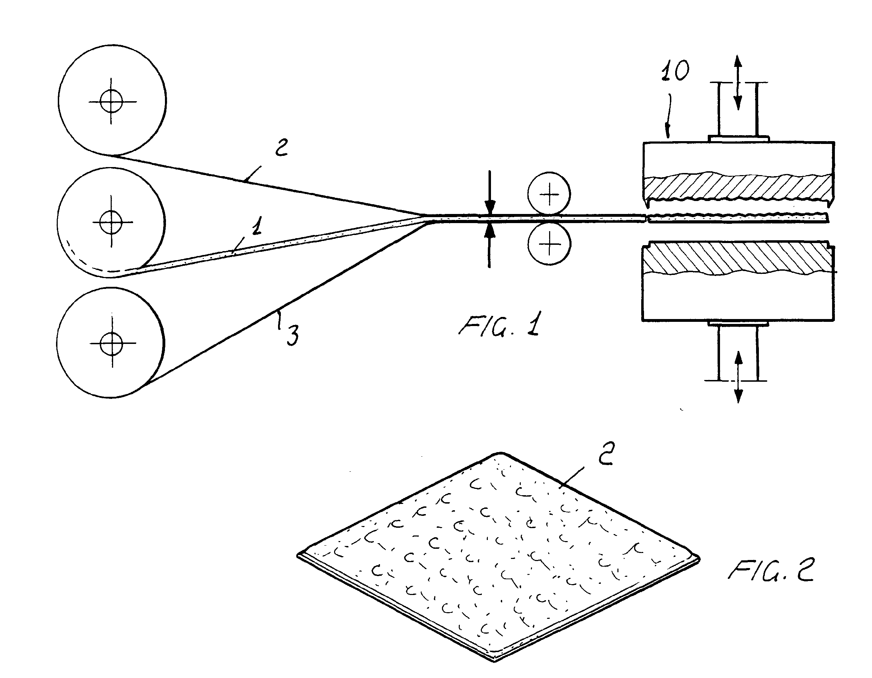

Figure 1 is a schematic view illustrating a system for making the modular coating element for coating floors, walls and the like, according to the present invention;
Figure 2 is a further schematic view illustrating a further modular element;

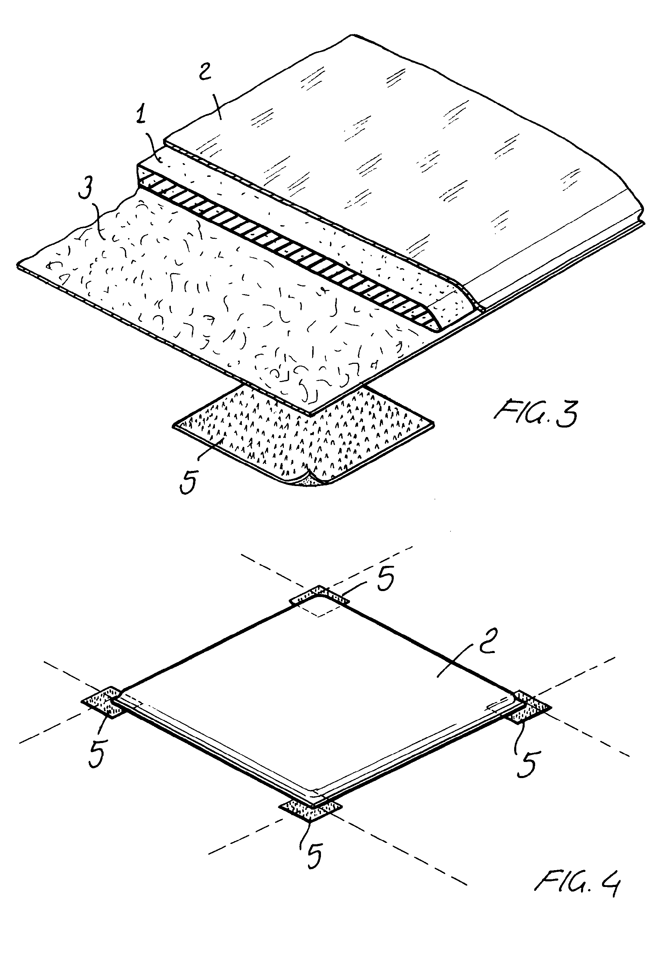

Figure 3 is a cross-section illustrating the modular element having a multiple layer construction;

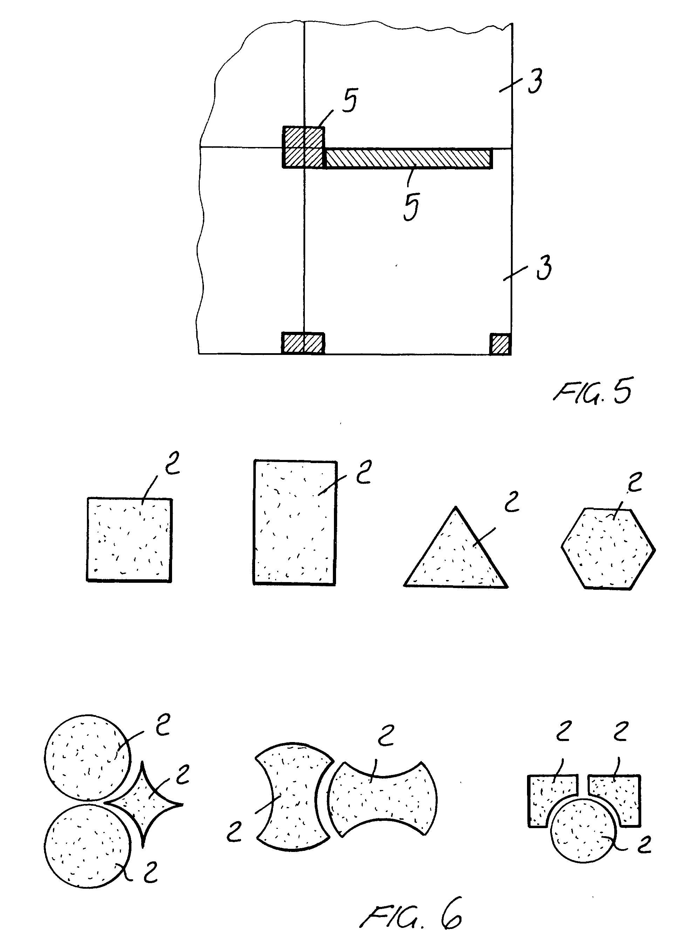

Figure 4 illustrates the modular element according to the present invention applied to tearable or tearing strips;
Figure 5 schematically shows a coupling method for coupling several modular elements;
   and
Figure 6 illustrates several examples of a possible infinite range of configurations to be assumed by the modular covering element according to the present invention.

### DESCRIPTION OF THE PREFERRED EMBODIMENT

With reference to the number references of the above mentioned figures, the modular coating element for coating floors, walls and the like according to the present invention, comprises a central layer 1, made of a thermoformable plastics material, preferably a closed cell foamed polyethylene material, of a high density and modified type.

On the exposed face of the central element 1 a top layer 2 is applied, said top layer being made of fabric materials or non-fabric materials, either natural or synthetic, preferably comprising a woven and dyed wool felt material, preferably processed by any suitably anti-smearing process.

On the bottom face of the central layer 1 is provided a bottom or lower layer 3, made of a fabric material suitable to hold a male portion of a tearing or tearable strip, such as a Velcro strip, which is commercially well known.

The three layers are connected by any suitable hot connection method, to be firmly bound to one another.

The thus made laminate material is then thermoformed and die-cut by using suitably contoured metal molds, which are designed to hot impress to the laminate the marks or projecting and recessed patterns, to be permanently associated with the surface of the central element and, accordingly, to the fabric material of the exposed face thereof.

On the non-exposed face of the laminate, a plurality of tearing or tearable strips 5 are provided, the other face thereof is so processed as to prevent any slipping on the smoother surfaces.

If the modular element must be used for coating walls or for permanent applications, then on the Velcro strip a bi-adhesive layer could be provided.

In order to make the modular coating element according to the present invention, it is possible to hot or flame connect the choosen material, to provide a thermoformable laminate, with its top layer 2 arranged on the outside, and having a variable thickness and being preferably either processed or not by anti-smearing solutions and anti-shrinking solutions, or by any other methods for providing it with a great anti-wear resistance, with aesthetic and texture features suitable for the intended applications.

Inside the laminate a synthetic material, obtained from plate or roll material is provided, which can have different thicknesses, densities and compositions, and suitable for thermoforming and holding a desired thermoformed configuration.

On the outside of the laminate, a bottom fabric material suitable to firmly hold the tearable strip is provided.

After the coupling or laminating process, the hot coupled material, i.e. without any glues or binding material, is simultaneously printed, sealed and cut on its perimeter, by any suitable press 10, thereby providing the desired pattern and/or configuration, to be coupled to further modular like elements, by the mentioned tearable strip or other suitable systems.

As schematically shown in the figures, the tearable strip can be simply coupled to the bottom face of a modular element to operate as an anti-slipping element and, if desired, it can also be used in an overhang configuration, to easily allow the connection of a plurality of modular element.

The invention as disclosed is susceptible to several modifications and variations, all of which will come within the scope of the invention.

Moreover, all the constructional details can be replaced by other technically equivalent elements.

In practicing the invention, the used materials, as well as the contingent size and shapes can be any, depending on requirements.

In this connection it should be apparent that the inventive article of manufacture can also be used, in addition to the above disclosed applications, as a coating carpet, as a coating for motor vehicle inner walls and as a wall coating in general.

It is also apparent that the inventive article of manufactures can be coupled by the above disclosed coupling methods, or used individually.

## Claims

1. A modular coating element for coating floors and walls, **characterized in that** said modular coating element comprises a thermoformable central layer having an exposed face on which a fabric or non-fabric material top layer is arranged, said central layer having another face thereof on which a bottom layer of a material suitable for coupling with a male portion of a tearing strip is arranged.

2. A modular coating element according to Claim 1, **characterized in that** said top layer is made of a woven wool felt material.

3. A modular coating element according to Claim 1, **characterized in that** said central layer comprises a closed cell high density modified foamed polyethylene layer.

4. A modular coating element according to Claim 1, **characterized in that** said tearing strip has a surface opposite to the surface thereof coupled to said bottom layer which has been processed by an anti-slipping process.

5. A modular coating element according to Claim 1, **characterized in that** said tearable strip is provided with a bi-adhesive strip on the face thereof opposite to the face thereof coupled to said bottom layer.

6. A modular coating element according to Claim 1, **characterized in that** said layers are hot coupled and constructionally connected.

7. A method for making a modular coating element for coating floors and walls, **characterized in that** said method comprises the steps of hot coupling a central layer of a thermoformable material, a top layer of a fabric or non fabric material and a bottom layer which can be coupled to a tearing strip, thermoforming said layers and simultaneously printing, sealing and perimetrically cutting said modular coating element, by a contoured mold.

8. A modular coating element according to Claim 1, **characterized in that** said modular coating element can be used as a carpet, as a coating of motor vehicle inner walls and as a coating of walls in general.

9. A modular coating element according to Claim 1, **characterized in that** said modular coating element can be individually used.
